# EUROPÄISCHE PATENTSCHRIFT

(11) **EP 3 044 852 B1**
(45) Veröffentlichungstag und Bekanntmachung des Hinweises auf die Patenterteilung: **02.08.2017**
(21) Anmeldenummer: 14766968.3
(22) Anmeldetag: 15.09.2014
(51) Int. Cl.: C08K 3/08, C08K 3/18, C08K 3/34, C08K 7/02, H02K 3/30, H02K 3/487, H02K 3/493, H02K 15/00

(54) **NUTVERSCHLUSSMASSE, NUTVERSCHLUSS UND VERFAHREN ZUM HERSTELLEN EINES NUTVERSCHLUSSES**
SLOT PLUGGING MASS, SLOT SEAL AND AND METHOD FOR PRODUCING A SLOT SEAL
MASSE DE BOUCHAGE D'ENCOCHE, FERMETURE D'ENCOCHE ET PROCÉDÉ DE FABRICATION DE FERMETURE D'ENCOCHE

(30) Priorität: 27.09.2013 DE 102013219485; 14.11.2013 EP 13192808
(43) Veröffentlichungstag der Anmeldung: 20.07.2016
(73) Patentinhaber: Siemens Aktiengesellschaft, 80333 München (DE)
(72) Erfinder: HUBER, Jürgen, 91058 Erlangen (DE); KLAUSSNER, Bernhard, 90408 Nürnberg (DE); SCHIRM, Dieter, 96149 Breitengüßbach (DE)
(86) Internationale Anmeldenummer: PCT/EP2014/069581
(87) Internationale Veröffentlichungsnummer: WO 2015/043991

(56) Entgegenhaltungen:
- EP-A1- 1 754 733
- EP-A1- 2 365 491
- JP-A- S5 111 109
- JP-A- S5 921 245
- JP-B- 3 051 973
- US-A- 2 768 153
- US-A- 3 624 032
- US-A1- 2009 023 843

## Beschreibung

Die Erfindung betrifft eine Nutverschlussmasse für eine elektrische Maschine, die zur Aufnahme einer elektrischen Leiteranordnung mindestens eine Nut mit einer Nutöffnung aufweist, enthaltend einen Magnetfüllstoff, insbesondere einen weichmagnetischen Füllstoff, sowie eine Reaktionsharzmischung umfassend mindestens eine Harz-Komponente und eine Härter-Komponente, die vor der Verarbeitung getrennt vorliegen. Die Erfindung betrifft weiterhin einen Nutverschluss sowie ein Verfahren zum Herstellen eines Nutverschlusses für eine elektrische Maschine.

Die Nuten von elektrischen Maschinen dienen zur Aufnahme von isolierten elektrischen Leitern bzw. Leiteranordnungen. Sie weisen im Regelfall eine Nutöffnung auf, über welche die Leiter bzw. Leiteranordnung in die Nut eingelegt wird. Insbesondere bei Hochspannungsmaschinen wird mit sogenannten "offenen Nuten" gearbeitet, wobei die Nutöffnung sich über die komplette Nutbreite erstreckt. Die Nutöffnung muss daher nach dem Einlegen des elektrischen Leiters bzw. der Leiteranordnung verschlossen werden, um ein Aufsteigen der Leiter aus der Nut während des Betriebs der elektrischen Maschine zu verhindern.

Der Nutverschluss für solche Nutöffnungen wird üblicherweise mit festen Verschlusskörpern, sogenannten Nutkeilen, ausgeführt. Diese Nutkeile sind z.B. aus technischen Schichtpressstoffen durch mechanische Bearbeitung gefertigt. Alternativ können sie aus thermoplastischen oder duroplastischen Formmassen durch Strangextrusion oder Spritzguss gefertigt sein.

Um die magnetische Flussführung im Bereich der Nutöffnung zu verbessern, sind die Nutverschlüsse teilweise weichmagnetisch ausgeführt. Dabei sind die Nutverschlüsse in Form von Nutkeilen, aus mit Eisen gefüllten Schichtpressstoffen ausgeführt. Ein solcher weichmagnetischer Nutverschluss wird allerdings üblicherweise mit der Nut verklebt, um einen guten Haftsitz zu erreichen. Ansonsten besteht die Gefahr, dass der Nutkeil sich durch die Betriebsbelastungen (thermische Belastung, thermomechanische Wechselbelastung, magnetische Wechselbelastung, Umwelteinflüsse) löst. Diese Verklebung ist nur mit erheblichem Aufwand prozesssicher ausführbar.

Ein vorgefertigter Verschlusskörper, der als Nutverschluss eingesetzt wird, ist z.B. in der WO 2006/100291 A1 beschrieben. Der Verschlusskörper besteht dabei aus einem Material mit einem thermoplastischen Polymermaterial und einem Magnetfüllstoff.

Eine weitere Form des weichmagnetischen Nutverschlusses sind mit Eisenpulver gefüllte, härtbare Epoxidharze, wie sie z.B. in den Offenlegungsschriften DE 1 288 186 und DE 1 299 357 beschrieben sind. Die Epoxidharze werden als pastenförmige Massen in die Nutöffnung eingedrückt und anschließend thermisch gehärtet. Ein solcher Nutverschluss zeichnet sich gegenüber den weichmagnetischen Keilen durch einen dauernden Haftsitz aus.

Hierzu beschreibt die JP S59 21245 A eine Nutverschlussmasse für eine rotierende elektrische Maschine. Die Nutverschlussmasse umfasst eine Reaktionsharzmischung mit einer Harz-Komponente und einem Härter. Zudem umfasst die Nutverschlussmasse einen magnetischen Füllstoff.

Des Weiteren beschreibt die US 3 624 032 A eine Formmasse aus einem Epoxyharz, einem cyclischen Polycarbonsäureanhydrid und einem Härtungskatalysator, wobei der Härtungskatalysator eine Komplexverbindung zwischen einem mehrwertigen Metall und einem Acetylaceton ist. Das als Härtungsmittel anwesende Anhydrid kann irgend ein cyclisches Anhydrid einer Dicarbonsäure oder einer Polycarbonsäure sein, das sich zur Vernetzung des Epoxyharzes hei Härtungstemperaturen eignet. Das Anhydrid kann beispielsweise ein Dianhydrid sein.

Der Erfindung liegt die Aufgabe zugrunde, einen verbesserten, härtbaren, magnetischen Nutverschluss anzugeben.

Die Aufgabe wird erfindungsgemäß gelöst durch eine Nutverschlussmasse für eine elektrische Maschine, die zur Aufnahme einer elektrischen Leiteranordnung mindestens eine Nut mit einer Nutöffnung aufweist, enthaltend:
- einen Magnetfüllstoff, insbesondere einen weichmagnetischen Füllstoff, sowie
- eine Reaktionsharzmischung umfassend mindestens eine Harz-Komponente und eine Härter-Komponente, wobei die Härter-Komponente ein Dianhydrid enthält und wobei die Nutverschlussmasse ein Zeolith als Trockenhaltemittel enthält.

Die Erfindung basiert auf der Erkenntnis, dass der Einsatz von einem Dianhydrid, welches insbesondere pulverförmig vorliegt, als Härter oder Mit-Härter in der Reaktionsharzmischung die Temperaturbeständigkeit und die mechanische Festigkeit der Nutverschlussmasse deutlich verbessert. Die Reaktionsharzmischung eignet sich somit für einen Anwendungstemperaturbereich über 155°C, somit lässt sich problemlos die Wärmeklassen F abdecken, ggf. auch höhere Wärmeklassen. Die Härter-Komponente, in diesem Fall das Dianhydrid, hat einen Anteil von ca. 5% bis maximal 50 Gew.-% der Reaktionsharzmischung.

Unter Magnetfüllstoff ist hierbei auch ein Magnetfüllstoffgemisch zu verstehen.

Die Harz-Komponente und die Härter-Komponente der Reaktionsharzmischung liegen dabei vor der Verarbeitung oder Herstellung der Nutverschlussmasse zunächst getrennt vor und werden insbesondere unmittelbar vor dem Einbringen der Nutverschlussmasse in eine Nut der elektrischen Maschine miteinander vermengt. Das Abmischen von Harz- und Härter-Komponente und Magnetfüllstoff kann in beliebiger Reihenfolge erfolgen. Als besonders vorteilhaft hat sich erwiesen, wenn der Magnetfüllstoff zunächst der Harz-Komponente beigemischt wird. Anschließend härtet die Nutverschlussmasse aufgrund der in der Reaktionsharzmischung erfolgenden Polyaddition aus. Da die Reaktionsharzmischung auch bei Raumtemperatur aushärtet, wird die Nutverschlussmasse insbesondere an ihrem Einsatzort vermengt. Denkbar ist auch die Nutverschlussmasse oder zumindest der Reaktionshärzmischung der Nutverschlussmasse wenige Stunden vor ihrer Anwendung in der Nutöffnung herzustellen.

Da das Dianhydrid sowie Anhydride im Allgemeinen in der Reaktionsharzmischung mit der Zeit Feuchtigkeit ziehen, enthält die Nutverschlussmasse ein Zeolith als Trocknungsmittel, um die Wasseraufnahme durch die Reaktionsharzmischung zu verhindern oder wenigstens zu minimieren.

Vorzugsweise wird als Dianhydrid in der Reaktionsharzmischung ein 3,3',4,4'-Benzophenonetetracarboxylic Dianhydride (CAS 2421-28-5) und/oder Pyromellitic Dianhydride (CAS 89-32-7) und/oder 3,3',4,4'-Biphenyltetracarboxylic Dianhydride (CAS 2420-87-3) verwendet.

Zweckdienlicherweise ist die Harz-Komponente der Reaktionsharzmischung ein Epoxidharz. Das Epoxidharz reagiert mit dem Dianhydrid auf geeignete Weise zu einem Reaktionsharzformstoff.

Nach einer bevorzugten Ausführungsvariante enthält die Nutverschlussmasse zudem organische und/oder anorganische Nanopartikel, insbesondere Core-Shell-Nanopartikel oder anorganische Nanopartikel auf SiO₂-Basis. Die Nanopartikel verbessern insbesondere das Fließverhalten der Reaktionsharzmischung und die Schlagzähigkeit des gehärteten Nutverschlusses.

Gemäß einer weiteren bevorzugten Ausführungsvariante weist die Nutverschlussmasse eine Glasübergangstemperatur auf, die gleich oder größer 200°C ist. Dies ist vorteilhaft, da mit dem Überschreiten der Glasübergangstemperatur eine deutliche Veränderung der mechanischen und elektrischen Eigenschaften einhergeht. Um den Einsatz des Nutverschlusses bei möglichst hohen Temperaturen zu ermöglichen, wird somit durch eine geeignete Zusammensetzung der Nutverschlussmasse eine Glasübergangstemperatur von 200°C oder mehr eingestellt.

Im Hinblick auf eine hohe magnetische Permeabilität des Nutverschlusses ist vorgesehen, dass in der Nutverschlussmasse der Magnetfüllstoff oder das Magnetfüllstoffgemisch vorzugsweise einen Anteil von mindestens 85 Gew.-% aufweist.

Darüber hinaus wird ein höherer Anteil des Magnetfüllstoffs erreicht, indem der Magnetfüllstoff vorteilhafterweise in Form von bimodalen bis multimodalen Partikelgrößenverteilungen vorliegt. Dies bedeutet, dass der Magnetfüllstoff mindestens zwei Partikelgrößenverteilungen aufweist, wobei die kleineren Partikel insbesondere die Zwischenräume zwischen den größeren Partikeln ausfüllen. Auf diese Weise wird eine möglichst hohe Packungsdichte geschaffen, welche wiederum in eine hohe Permeabilität resultiert. Der Magnetfüllstoff enthält ein Eisenpulver, insbesondere ein Schwammeisenpulver oder ein Carbonyleisenpulver. Das Eisenpulver hat eine mittlere Partikelgröße zwischen etwa 40 und 500 µm, insbesondere von etwa 200 µm bis 300 µm. Grundsätzlich sind aber auch Partikelgrößen kleiner als 40 µm bzw. größer als 500 µm möglich.

Weiterhin von Vorteil ist, dass die Nutverschlussmasse faserige Füllstoffe mit einer Faserlänge von 50 µm bis 10000 µm, insbesondere von 100 µm bis 5000 µm, insbesondere von 100 µm bis 3000 µm, enthält. Solche faserige Füllstoffe bewirken eine Erhöhung der mechanischen Festigkeit. Als faserige Füllstoffe werden beispielsweise anorganische Fasern wie Glasfasern bzw. auch organische Fasern wie Aramidfasern verwendet. Zudem sind auch beliebige Fasermischungen möglich.

Die Aufgabe wird weiterhin erfindungsgemäß gelöst durch einen Nutverschluss einer elektrischen Maschine aus einer Nutverschlussmasse nach einer der oben beschriebenen Ausführungen.

Die Aufgabe wird zudem erfindungsgemäß gelöst durch ein Verfahren zum Herstellen eines Nutverschlusses für eine elektrische Maschine, die zur Aufnahme einer elektrischen Leiteranordnung mindestens eine Nut mit einer Nutöffnung aufweist, wobei
- eine Nutverschlussmasse aus mindestens einer Harz-Komponente und einer ein Dianhydrid enthaltenden Härter-Komponente, die zu einer Reaktionsharzmischung vermischt werden, sowie einem Magnetfüllstoff, insbesondere einem weichmagnetischen Füllstoff, hergestellt wird, und
- die Nutverschlussmasse nach dem Einbringen der Leiteranordnung zum Verschluss der Nutöffnung in die Nut eingebracht wird.

Um ein Aushärten der Nutverschlussmasse zu beschleunigen, wird die Nutverschlussmasse bevorzugt nach dem Einbringen in die Nut wärmebehandelt, wobei die Wärmebehandlung bei 70°C bis 250°c, insbesondere bei 120°C bis 160°C, erfolgt.

Die in Bezug auf die Nutverschlussmasse bereits angegebenen Vorteile und bevorzugten Ausführungen lassen sich sinngemäß auf das Verfahren zum Herstellen eines Nutverschlusses übertragen.

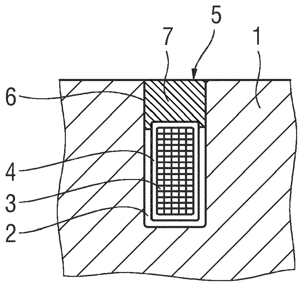

Ein Ausführungsbeispiel der Erfindung wird anhand einer Zeichnung näher erläutert. Hierin zeigt die einzige Figur ein Ausführungsbeispiel eines Stators einer elektrischen Maschine mit einem magnetischen Nutverschluss.

In der Figur ist ein Ausführungsbeispiel eines Stators 1 einer elektrischen Maschine in einem Teilquerschnitt gezeigt. Der Stator 1 umfasst eine Nut 2, in der eine elektrische Leiteranordnung 3 platziert ist. Die nur schematisch gezeigte Leiteranordnung 3 kann als elektrische Einzel-Leiter oder auch als Kombination mehrerer elektrischer Teil-Leiter ausgeführt sein. Sie ist mit einer elektrischen Isolierung 4 umgeben und ist Teil einer Spulenwicklung des Stators 1. Grundsätzlich können die Nut 2 und die Leiteranordnung 3 anstelle im Stator 1 auch in einem Rotor der elektrischen Maschine vorgesehen sein.

Im Bereich einer Nutöffnung 5 ist innerhalb der Nut 2 ein Nutverschluss 6 angeordnet. Der Nutzverschluss 6 ist aus einer Nutverschlussmasse 7 ausgebildet, die einen weichmagnetischen Füllstoff sowie eine Reaktionsharzmischung enthält. Die Reaktionsharzmischung ist zumindest aus einer Harzkomponente; im gezeigten Ausführungsbeispiel ein Epoxidharz, und einer Härter-Komponente, die in diesem Fall ein pulverförmiges Dianhydrid wie z.B. CAS 2421-28-5 enthält, zusammengesetzt. Die Nutverschlussmasse 7 kann zudem ein Zeolith als Trockenhaltemittel, organische und/oder anorganische Nanopartikel sowie faserige Füllstoffe enthalten.

Der Anteil des Magnetfüllstoffs in der Nutverschlussmasse 7 beträgt mindestens 85 Gew.-%. Der Anteil des Dianhydrids in der Reaktionsharzmischung liegt zwischen 5% und 50%. Die Komponenten der Nutverschlussmasse 7 oder zumindest die Komponenten der Reaktionsharzmischung werden insbesondere unmittelbar vor ihrem Einbringen in die Nutöffnung 5 zusammengemischt. Nachdem die Nutverschlussmasse 7 in der Nutöffnung 5 eingebracht ist, wird sie insbesondere auf über 120°C erhitzt, wodurch die Polyadditionsreaktion in der Nutverschlussmasse beschleunigt wird, so dass die Nutverschlussmasse 7 zum Nutverschluss 6 aushärtet.

Eine derart hergestellte Nutverschlussmasse 7 zeichnet sich durch eine hohe Chemikalienbeständigkeit, durch eine hohe Temperaturbeständigkeit sowie mechanische Festigkeit, durch eine hohe magnetische Permeabilität aufgrund des hohen Anteils am Magnetfüllstoff, sowie durch eine gute Anhaftung an die Nutflanken auch bei erhöhter Temperatur im Einsatz der elektrischen Maschine aus. Aufgrund ihrer Zusammensetzung weist die Nutverschlussmasse 7 insbesondere eine Glasübergangstemperatur größer 200°C auf. Der Anwendungsbereich des Nutverschlusses 6 liegt in Wärmeklasse F oder größer, d.h. im Betrieb der elektrischen Maschine kann eine Temperatur von insbesondere 155°C erreicht und ggf. überschritten werden.

## Patentansprüche

1. Nutverschlussmasse (7) für eine elektrische Maschine, die zur Aufnahme einer elektrischen Leiteranordnung (3) mindestens eine Nut (2) mit einer Nutöffnung (5) aufweist, enthaltend:
- einen Magnetfüllstoff, insbesondere einen weichmagnetischen Füllstoff, sowie
- eine Reaktionsharzmischung umfassend mindestens eine Harz-Komponente und eine Härter-Komponente,
**dadurch gekennzeichnet, dass**
- die Härter-Komponente ein Dianhydrid enthält und
- die Nutverschlussmasse (7) ein Zeolith als Trockenhaltemittel enthält.

2. Nutverschlussmasse (7) nach Anspruch 1,
**dadurch gekennzeichnet, dass** als Dianhydrid 3,3',4,4'-Benzophenonetetracarboxylic dianhydride (CAS 2421-28-5) und/oder Pyromellitic Dianhydride (CAS 89-32-7) und/oder 3,3',4,4'-Biphenyl tetracarboxylic dianhydride (CAS 2420-87-3) verwendet wird.

3. Nutverschlussmasse (7) nach einem der vorhergehenden Ansprüche,
**dadurch gekennzeichnet, dass** die Harz-Komponente ein Epoxidharz ist.

4. Nutverschlussmasse (7) nach einem der vorhergehenden Ansprüche,
**dadurch gekennzeichnet, dass** die Nutzverschlussmasse (7) zum Verbessern eines Fließverhaltens der Reaktionsharzmischung und einer Schlagzähigkeit organische und/oder anorganische Nanopartikel enthält.

5. Nutverschlussmasse (7) nach einem der vorhergehenden Ansprüche,
mit einer Glasübergangstemperatur gleich oder größer 200°C.

6. Nutverschlussmasse (7) nach einem der vorhergehenden Ansprüche,
**gekennzeichnet durch** einen Anteil am Magnetfüllstoff, der mindestens 85 Gew.-% beträgt.

7. Nutverschlussmasse (7) nach einem der vorhergehenden Ansprüche,
**dadurch gekennzeichnet, dass** der Magnetfüllstoff in Form von bimodalen bis multimodalen Partikelgrößenverteilungen vorliegt.

8. Nutverschlussmasse (7) nach einem der vorhergehenden Ansprüche,
**gekennzeichnet durch** faserige Füllstoffe mit einer Faserlänge von 50 µm bis 10000 µm, insbesondere von 100 µm bis 5000 µm, insbesondere von 100 µm bis 3000 µm.

9. Nutverschluss (6) einer elektrischen Maschine aus einer Nutverschlussmasse (7) nach einem der vorhergehenden Ansprüche.

10. Verfahren zum Herstellen eines Nutverschlusses (6) für eine elektrische Maschine, die zur Aufnahme einer elektrischen Leiteranordnung (3) mindestens eine Nut (2) mit einer Nutöffnung (5) aufweist, wobei
- eine Nutverschlussmasse aus mindestens einer Harz-Komponente und einer ein Dianhydrid enthaltenden Härter-Komponente, die zu einer Reaktionsharzmischung vermischt werden, sowie einem Magnetfüllstoff, insbesondere einem weichmagnetischen Füllstoff, hergestellt wird, wobei die Nutverschlussmasse (7) ein Zeolith als Trockenhaltemittel enthält und
- die Nutverschlussmasse (7) nach dem Einbringen der Leiteranordnung (3) zum Verschluss der Nutöffnung (5) in die Nut (2) eingebracht wird.

11. Verfahren nach Anspruch 10,
wobei die Nutverschlussmasse (7) nach dem Einbringen in die Nut (2) bei 70°C bis 250°C, insbesondere bei 120°C bis 160_{°}C, wärmebehandelt wird.

## Claims

1. Slot sealing material (7) for an electric machine, which to accommodate an electric conductor arrangement (3) has at least one slot (2) with a slot opening (5), containing:
- a magnetic filler, in particular a soft-magnetic filler, and
- a reaction resin mixture comprising at least a resin component and a curing agent component,
**characterised in that**
- the curing agent component contains a dianhydride and
- the slot sealing material (7) contains a zeolith as a desiccant.

2. Slot sealing material (7) according to claim 1,
**characterised in that** 3,3',4,4'-benzophenonetetracarboxylic dianhydride (CAS 2421-28-5) and/or pyromellitic dianhydride (CAS 89-32-7) and/or 3,3',4,4'-biphenyl tetracarboxylic dianhydride (CAS 2420-87-3) is used as a dianhydride.

3. Slot sealing material (7) according to one of the preceding claims,
**characterised in that** the resin component is an epoxy resin.

4. Slot sealing material (7) according to one of the preceding claims,
**characterised in that** the slot sealing material (7) contains organic and/or inorganic nanoparticles in order to improve a flow behaviour of the reaction resin mixture and an impact resistance.

5. Slot sealing material (7) according to one of the preceding claims,
with a glass transition temperature equal to or greater than 200°C.

6. Slot sealing material (7) according to one of the preceding claims,
**characterised by** a proportion of magnetic filler which is at least 85% by weight.

7. Slot sealing material (7) according to one of the preceding claims,
**characterised in that** the magnetic filler is present in the form of bimodal to multimodal particle size distributions.

8. Slot sealing material (7) according to one of the preceding claims,
**characterised by** fibrous fillers with a fibre length of between 50 µm and 10000 µm, in particular between 100 µm and 5000 µm, in particular between 100 µm and 3000 µm.

9. Slot seal (6) of an electric machine made of a slot sealing material (7) according to one of the preceding claims.

10. Method for producing a slot seal (6) for an electric machine, which to accommodate an electric conductor arrangement (3) has at least one slot (2) with a slot opening (5), wherein:
- a slot sealing material is produced from at least one resin component and a curing agent component containing a dianhydride, which are mixed to form a reaction resin mixture, and from a magnetic filler, in particular a soft-magnetic filler, wherein the slot sealing material (7) contains a zeolith as a desiccant and
- to seal the slot opening (5) the slot sealing material (7) is placed into the slot (2) after the placement of the conductor arrangement (3).

11. Method according to claim 10,
wherein after being placed into the slot (2) the slot sealing material (7) is heat-treated at 70°C to 250°C, in particular at 120°C to 160°C.

## Revendications

1. Masse (7) de bouchage d'encoche, pour une machine électrique, qui a au moins une encoche (2) ayant une ouverture (5), pour la réception d'un agencement conducteur électrique, comportant :
- une matière de remplissage magnétique, notamment une matière de remplissage à magnétisme double ainsi que
- un mélange de résine de réaction, comprenant au moins un constituant de résine et un constituant de durcisseur,
**caractérisée en ce que**
- le constituant de durcisseur contient un dianhydride et
- la masse de bouchage d'encoche contient une zéolithe comme agent de maintien de la siccité.

2. Masse (7) de bouchage d'encoche suivant la revendication 1,
**caractérisée en ce qu'**il est utilisé comme dianhydride, du dianhydrine d'acide 3, 3' ,4, 4' - benzophénonetétracarboxylique (CAS 2421-28-5) et/ou du dianhydride d'acide pyromellitique (CAS 89-32-7) et/ou du dianhydride d'acide 3, 3' ,4, 4' - biphényltétracarboxylique (CAS 2420-87-3).

3. Masse (7) de bouchage d'encoche suivant l'une des revendications précédentes,
**caractérisée en ce que** le constituant de résine est une résine époxyde.

4. Masse (7) de bouchage d'encoche suivant l'une des revendications précédentes,
**caractérisée en ce que** la masse (7) de bouchage d'encoche contient des nanoparticules organiques et/ou minérales pour améliorer la fluidité du mélange de résine de réaction et/ou la résistance au choc.

5. Masse (7) de bouchage d'encoche suivant l'une des revendications précédentes,
ayant un point de transition à l'état vitreux supérieur ou égal à 200°C.

6. Masse (7) de bouchage d'encoche suivant l'une des revendications précédentes,
**caractérisée par** une proportion de matière de remplissage magnétique représentant au moins 85% en poids.

7. Masse (7) de bouchage d'encoche suivant l'une des revendications précédentes,
**caractérisée en ce que** la matière de remplissage magnétique se présente sous la forme d'une répartition granulométrique bimodale à multimodale.

8. Masse (7) de bouchage d'encoche suivant l'une des revendications précédentes,
**caractérisée par** des charges fibreuses ayant une longueur de fibre de 50 µm à 10000 µm, notamment de 100 µm à 5000 µm, notamment de 100 µm à 3000 µm.

9. Bouchage (6) d'encoche d'une machine électrique en une masse (7) de bouchage d'encoche suivant l'une des revendications précédentes.

10. Procédé de production d'un bouchage (6) d'encoche pour une machine électrique, qui a, pour la réception d'un agencement (3) conducteur électrique, au moins une encoche (2) ayant une ouverture (5) d'encoche, dans lequel
- on prépare une masse de bouchage d'encoche, composée d'au moins un constituant de résine et d'un constituant durcisseur contenant un dianhydride, que l'on mélange en un mélange de résine de réaction, ainsi qu'une matière de remplissage magnétique, notamment une matière de remplissage à magnétique doux, la masse (7) de bouchage d'encoche contenant une zéolithe comme agent de maintien de la siccité et
- on introduit la masse (7) de bouchage d'encoche, après l'introduction de l'agencement (3) conducteur, dans l'encoche (2) pour boucher l'ouverture (5) de l'encoche.

11. Procédé suivant la revendication 10,
dans lequel on traite thermiquement, de 70°C à 250°C, notamment de 120°C à 160°C, la masse (7) de bouchage d'encoche, après l'avoir introduite dans l'encoche (2).
